# DEMANDE DE BREVET EUROPEEN

(11) **EP 0 906 892 A1**
(43) Date de publication de la demande: **07.04.1999**
(21) Numéro de dépôt: 98402346.5
(22) Date de dépôt: 24.09.1998
(51) Int. Cl.: C02F 11/12

(54) **Dispositif de déshydratation de boues de curage**

(30) Priorité: 01.10.1997 FR 9712203
(71) Demandeur: COMPAGNIE DU SOL, 92000 Nanterre (FR)
(72) Inventeur: Bouchelagem, Abdelkrim, 75019 Paris (FR); Steff de Verninac, Bertrand, 78810 Fougerolles (FR)
(74) Mandataire: Dronne, Guy

(57) **Abrégé**

L'invention concerne un dispositif de traitement discontinu de boues polluées comprenant au moins un bassin principal (10) de traitement des boues délimité par au moins une berge externe (12), des moyens (16) pour réaliser une étanchéité à l'eau au fond et sur les parois du dit bassin principal (10), des moyens pour réaliser une étanchéité à l'air (18), destinés à être disposés au-dessus de la face supérieure des boues disposées dans ledit bassin principal (10) , des moyens (20) de drainage de l'eau disposés à la partie inférieure du bassin, au dessus des moyens d'étanchéité à l'eau, des moyens de filtration (30; 31, 33) de l'eau drainée, des moyens d'aspiration (26) reliés aux moyens de drainage pour favoriser le drainage de l'eau et des moyens d'évacuation de l'eau drainée (22, 24, 32).

## Description

La présente invention concerne un dispositif de traitement discontinu de boues polluées.

La présente invention concerne plus particulièrement un dispositif de traitement de boues polluées utilisé pour le traitement de boues de curage contenant, en particulier, des ions de métaux lourds.

Les métaux lourds sont présents naturellement dans l'environnement, sous leurs formes ioniques, en faibles concentrations. Ils ont la particularité de s'accumuler dans les tissus vivants, animaux ou végétaux et deviennent très toxiques lorsque leur concentration augmente, provocant des cancers ou ayant des effets tératogènes.

La législation actuelle prenant en compte la protection de l'environnement, il sera bientôt obligatoire que tout milieux contaminé par les ions des métaux lourds soit traité afin d'en abaisser la teneur.

Parmi les milieux les plus fortement contaminés par les métaux lourds, se comptent les lits des cours d'eau ou le sol des installations portuaires. Ces milieux sont, en effet, fréquemment pollués par des métaux lourds ou autres substances nocives pour l'environnement, provenant pour leur majorité des déchets industriels.

Régulièrement, le sol de ces milieux doit être dragué et curé afin d'éviter une pollution trop concentrée. Après dragage et évacuation d'une grande partie de l'eau contenue dans le sol dragué, il ne reste que des boues appelées boues de curage. L'eau extraite dans la première phase du traitement est ensuite traitée dans des stations d'épuration classiques. Les boues de curage concentrent donc les ions métalliques lourds qui polluaient le milieux et selon la nouvelle législation , elles doivent ou devront donc être traitées.

Les techniques employées jusqu'à présent ne prévoyaient pas la dépollution des boues. Le dépôt des boues de curage sur la berge en attente de leur consolidation est une méthode longue qui n'est plus tolérée du point de vue des normes de pollution. En effet, la boue demeurant polluée, les eaux de ruissellement qui s'en écoulent entraînent à leur tour les polluants contenus dans la boue et représentent donc une nouvelle source de pollution importante.

Diverses techniques ont été développées pour limiter les risques de pollution due aux effluents dégagées par les boues traitées. Une de ces techniques consiste à stoker les boues qui, sous l'effet de leur propre poids, perdent l'eau qu'elles contiennent et se consolident. Cette méthode présente deux inconvénients majeurs : la boue restant polluée, elle continue à produire des effluents pollués pendant une période plus ou moins longue ; les boues ayant un comportement rhéologique thixotrope, c'est à dire ayant une consistance molle, forment une fois stockées, des zones meubles, donc dangereuses, jusqu'à ce que la boue se soit suffisamment consolidée.

Une autre méthode consiste à essorer mécaniquement les boues de façon à supprimer une partie de l'eau qu'elles contiennent. Cette méthode a pour avantage d'améliorer la tenue mécanique des boues qui peuvent être ainsi pelletées. En revanche, seule une faible quantité de boue peut être traitée lors d'un seul essorage et de plus, ces boues contenant toujours des agents polluants, elles vont continuer, une fois stockées, à émettre des effluents polluants.

Le but de la présente invention est donc de fournir un dispositif de traitement des boues polluées qui permet après traitement des boues, d'éliminer l'émission de tout effluent toxique.

Ce but est atteint grâce à un dispositif comprenant au moins un bassin principal de traitement des boues délimité par au moins une berge externe, des moyens pour réaliser une étanchéité à l'eau au fond et sur les parois du bassin principal, des moyens pour réaliser une étanchéité à l'air, destinés à être disposés au-dessus de la face supérieure des boues disposées dans le bassin principal, des moyens de drainage de l'eau disposés à la partie inférieure du bassin, au dessus des moyens d'étanchéité à l'eau, des moyens de filtration de l'eau drainée pour retenir les polluants contenus dans les boues, des moyens d'aspiration reliés aux moyens de drainage pour favoriser le drainage de l'eau et des moyens d'évacuation de l'eau drainée.

Les boues traitées par le dispositif de la présente invention, n'émettent plus aucun effluent toxique pour l'environnement, même sous l'effet des eaux de ruissellement.

Un premier avantage de la présente invention est de fournir des boues qui une fois traitées ont des propriétés mécaniques améliorées.

Un second avantage est que les boues traitées par le présent dispositif, deviennent solides beaucoup plus rapidement qu'avec les techniques de l'art antérieur. La surface du bassin de traitement ne représente pas de danger et peut donc être aménagée rapidement.

La présente invention a également l'avantage de produire des boues traitées qui peuvent être stockées sans dispositif particulier puisque les boues ne contenant plus aucun agent nocif, elles ne doivent pas être obligatoirement protégées des précipitations, ce qui réduit considérablement les coûts de stockage.

Un autre avantage de la présente invention est de permettre la valorisation des boues ainsi traitées. Les boues traitées par le dispositif de la présente invention ayant des propriétés mécaniques améliorés et étant exemptes de polluants, elles peuvent en effet être utilisées dans le remplissage de carrière, par exemple, ce qui n'était pas possible avec les boues traitées par les dispositifs de l'art antérieur.

La présente invention a aussi l'avantage de pouvoir traiter de grandes quantités de boues sur une surface réduite. En effet, les moyens de pompages permettent de drainer une épaisseur de boue relativement importante en un laps de temps relativement court. L'abaissement du temps et de la surface de traitement permettent également d'abaisser considérablement les coûts de traitement.

Le dispositif selon la présente invention a l'avantage d'être utilisable plusieurs fois. Lorsque les moyens de filtration sont saturés par les polluants, il suffit de les remplacer par des moyens de filtrations neufs ou recyclés.

Selon un premier mode de réalisation, les moyens de filtration sont situés en aval des moyens de drainage et reliés à des moyens d'aspiration additionnels ; les moyens de drainage comportent une pluralité de tuyaux crépinés et les moyens d'aspiration comportent au moins une pompe à vide.

Ce mode de réalisation présente l'avantage de rendre facilement accessible les moyens de filtrations qui peuvent être changés en cours d'opération sans que la boue en cours de traitement ne doive être retirée du bassin.

Un second mode de réalisation consiste à placer les moyens de filtration en amont des moyens d'aspiration et de façon à ce qu'ils assurent également la fonction de drainage de l'eau, les moyens d'aspiration comportant au moins une pompe à vide.

Ce mode de réalisation présente l'avantage de réduire le nombre des moyens d'aspiration, le drainage et la filtration s'effectuant simultanément.

Ce mode de réalisation présente également l'avantage de ne nécessiter qu'un nettoyage réduit de l'installation. En effet, les conduites d'évacuation sont parcourues par de l'eau filtrée et donc ne risquent pas d'être contaminées par des quelconques agents polluants. Le remplacement des moyens de filtration qui assure légalement le drainage renouvelle donc, par la même occasion, les moyens de filtration et les moyens de drainage.

L'invention sera bien comprise et ses avantages apparaîtront mieux à la lecture de la description détaillée qui suit, de deux modes de réalisation représentés à titre d'exemples non limitatif. La description se réfère aux dessins annexes sur lesquels :
- la figure 1 représente une vue en coupe verticale du premier mode de réalisation de la présente invention ;
- la figure 2 représente une vue en coupe verticale d'une variante possible de premier mode de réalisation selon la présente invention ;
- la figure 3 représente une vue en coupe verticale du second mode de réalisation de la présente invention ;
- la figure 4 montre les connections entre tuyaux lisses et tuyaux crépinés utilisées dans les deux modes de réalisation.

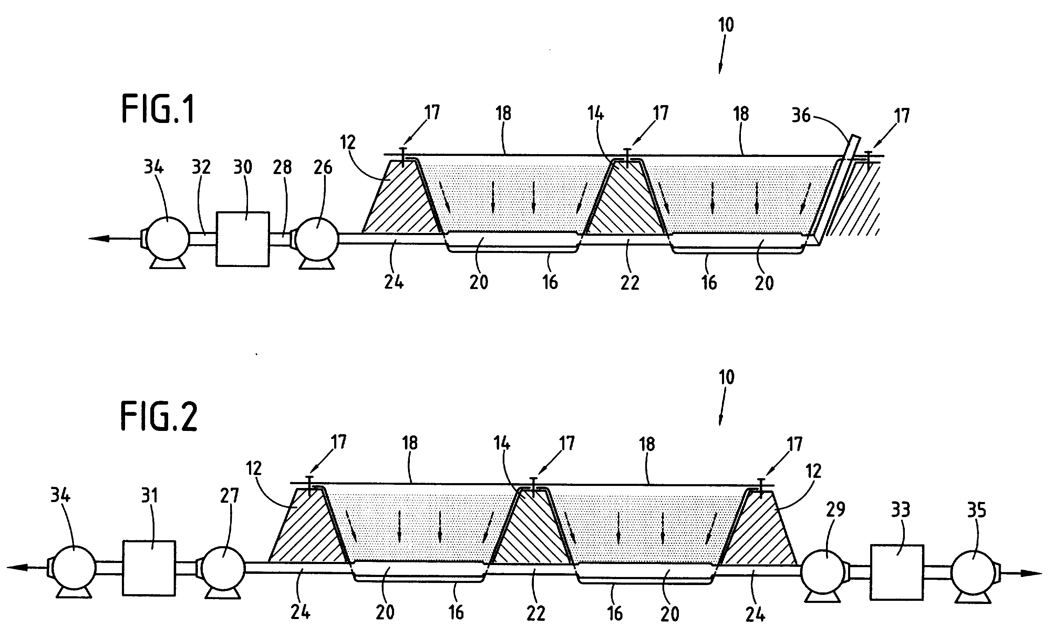

En se référant aux figures 1 et 2, un premier mode de réalisation ainsi qu'une de ses variantes possibles vont être exposés.

Sur la figure 1, on voit un bassin principal 10 délimité par une berge externe 12. Le bassin principal 10 est en effet tout d'abord creusé, puis, après que les divers aménagements décrits ultérieurement aient été effectués, le bassin 10 est refermé par la berge externe 12. Les trois autres parois délimitant le bassin sont donc creusées à même le terrain . On peut également envisager de construire un bassin délimité par quatre digues de même nature que la berge externe 12.

La berge externe 12 est construite de façon à pouvoir résister à la poussée des boues qui seront traitées dans le bassin. Le bassin est divisé en deux bassins par l'addition d'une digue additionnelle 14 qui peut être en matériau drainant, en matériau filtrant capable de filtrer les divers polluants contenus dans la boue et qu'il est nécessaire d'éliminer, ou, par exemple, en un matériau réalisé à partir d'un coulis tel que celui décrit dans la demande de brevet français publiée sous le N° 2 568244. Un tel coulis a en effet la propriété de pouvoir retenir les ions des métaux lourds. Dans ce cas, le matériau réalisé à partir de ce coulis devra avoir une porosité suffisante pour pouvoir laisser l'eau s'écouler tout en assurant la rétention des ions métalliques lourds de manière satisfaisante.

Le bassin principal 10, selon sa surface, peut être divisé en plusieurs bassins par addition d'autant de digues additionnelles 14 qu'il est nécessaire d'en ajouter. Lorsqu'une ou plusieurs digues additionnelles 14 sont en matériau drainant ou en matériau filtrant, dans ce cas, la surface de drainage étant plus importante, le drainage sera plus efficace.

Les parois et le fond des deux bassins sont recouverts d'un matériau imperméable 16, pouvant se présenter sous la forme d'une feuille, de façon à assurer l'étanchéité des bassins. Ce matériau peut être, par exemple, une géomembrane. Dans le cas où la digue 14 est en matériau drainant ou drainant et filtrant, le matériau imperméable 16 ne devra recouvrir qu'une partie de la paroi de la digue drainante de façon à ne pas freiner ou supprimer le drainage dû à la digue.

La surface libre de chaque bassin est recouverte d'une feuille imperméable 18, fixée sur chaque bord ou digue additionnelle 14 délimitant ledit bassin. Le bassin principal 10 doit être divisé en bassins de taille à pouvoir être recouverts par des feuilles 18 ayant des dimensions déterminées. Les feuilles 18 sont soudées entre elles et fixées sur chaque bord et chaque digue additionnelle par des moyens de fixation 17

Ces feuilles 18 assemblées recouvrent la totalité du bassin principal 10. Leur fonction est double : protéger les boues à traiter des précipitations qui augmenteraient considérablement le débit d'eau à filtrer et assurer un étanchéité suffisante pour que de l'air ne soit pas aspiré par les moyens d'aspiration qui seront décrits ultérieurement. Les feuilles 18 doivent donc être tendues et fixées de façon à assurer l'étanchéité et à supporter le poids des précipitations qui pourraient s'accumuler à leur surface. Ces feuilles 18 peuvent être constituées d'une géomembrane.

Sur le fond de chaque bassin ainsi délimité, on dispose, sur la surface de la géomembrane 16, une pluralité de tuyaux crépinés 20 ou de conduites drainantes. Ces tuyaux crépinés 20 peuvent être agencés de différentes manières, de façon à former un réseau assurant un drainage efficace. Par exemple, ils peuvent être parallèles entre eux ou perpendiculaires à un tuyau central qui assurerait l'écoulement vers les moyens d'aspirations. Ces tuyaux crépinés 20 sont raccordés à un ou plusieurs tuyaux lisses 22 et 24 disposés respectivement sous la digue additionnelle 14 et sous la berge externe12. Dans le cas où la digue 14 est en matériau drainant, le tuyaux 22 est un tuyau crépiné de façon à permettre le drainage par la digue additionnelle 14. Le tuyau lisse 24 est raccordé aux moyens d'aspiration qui peuvent être par exemple, une pompe à vide 26. La pompe à vide 26 est reliée à un tuyau lisse 28 lui même relié à un massif filtrant 30 formé de pains de matériau filtrant, par exemple en matériau réalisé à partir du coulis précédemment décrit et capable de filtrer les ions métalliques lourds tout en laissant l'eau s'écouler. L'eau filtrée par le massif filtrant 30 est aspirée par la pompe à vide 34 et s'écoule dans le tuyau 32.

Les boues sont introduites dans chaque bassin, l'ensemble étant ensuite recouvert par une géomembrane 18. Sous l'effet à la fois de la gravité et surtout sous l'effet de la pompe à vide 26, l'eau contenue dans la boue est aspirée et passe par les trous des tuyaux crépinés 20 disposés sous chaque bassin. Si la digue additionnelle 14 est en matériau drainant, l'eau s'écoule également dans le tuyau 22 qui est alors un tuyau crépiné. Sous l'effet de la pompe 26, l'eau est aspirée et s'écoule dans les différents tuyaux lisses, jusqu'au massif filtrant 30. Les agents polluants, en particulier, les ions métalliques lourds sont retenus sur les sites du massif filtrant et l'eau qui ressort par le tuyau 32, aspiré par la pompe 34 est de l'eau propre qui peut être rejetée telle que ou utilisée.

Lorsque le traitement des boues est achevé, celles-ci sont enlevées des différents bassins.

Un bouchon de nettoyage 36 peut être prévu en amont du système de drainage de façon à pouvoir nettoyer les différents tuyaux lisses et crépinés par l'introduction d'un furet à l'intérieur des tuyaux crépines 20.

Diverses variantes peuvent être envisagées en fonction du débit d'eau à traiter. On peut par exemple, diviser le flux d'eau polluée sortant de la pompe à vide 26 et l'orienter vers plusieurs massifs filtrants tels que celui décrit précédemment et capable de retenir les ions métalliques lourds. Dans le cas de différents polluants à traiter, on peut prévoir différents massifs adaptés au traitement des polluants en question. Ces massifs peuvent être ajoutés en série avant ou après le massif filtrant 30 de façon à permettre l'élimination successive des différents polluants.

En se référant à la figure 2, une variante du premier mode de réalisation va être expliquée. Comme représenté sur la figure 2, on peut prévoir de placer plusieurs pompes 27 et 29 pour drainer chacun des bassins séparément. Les différents flux drainés pouvant être rassemblés pour être traités par un seul massif filtrant 30 ou être traités séparément, respectivement sur un des massifs 31 et 33. On peut comme exposé précédemment, remplacer le massif filtrant 30 capable de filtrer les ions métalliques lourds, par un massif constitué d'un autre matériau, en fonction du polluant à traiter, ou lui ajouter d'autres massifs filtrants capables de retenir d'autres polluants.

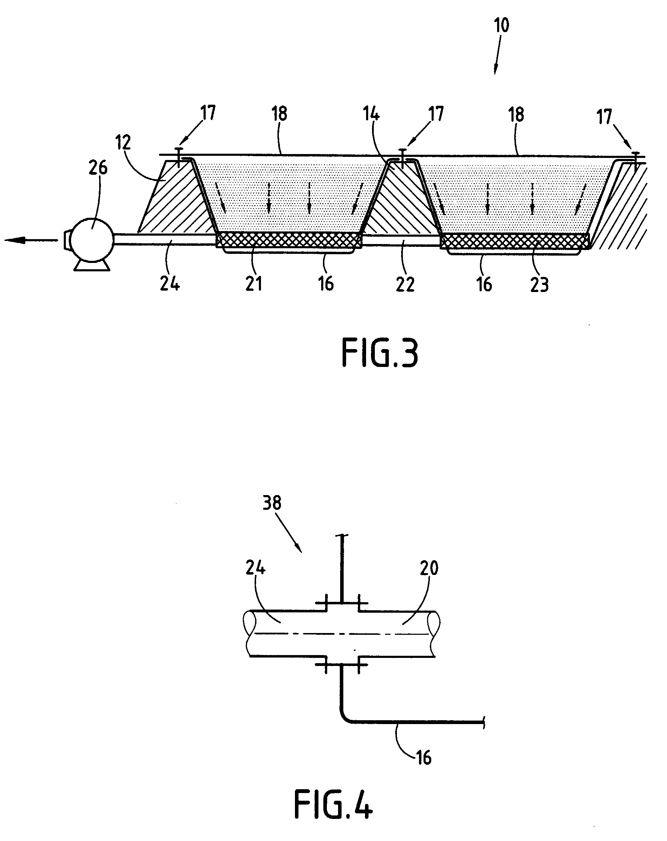

Un second mode de réalisation possible va être décrit en se référant à la figure 3. Ce second mode de réalisation se distingue du premier par le fait que les tuyaux crépinés 20 placés sous chacun des bassins sont remplacés par des massifs 21 et 23 en matériau filtrant capable de retenir les ions métalliques lourds, d'une épaisseur et d'une porosité telles qu'elles permettent à la fois une filtration suffisante des ions métalliques lourds sans pour autant freiner le drainage de l'eau, c'est à dire son écoulement. Selon ce mode de réalisation, une seule pompe à vide, la pompe 26 est nécessaire. Dans la cas ou la digue additionnelle est en matériau drainant, les mêmes dispositions que celles prises dans le premier mode de réalisation doivent être mises en .uvre.

La pompe à vide 26 aspire comme décrit précédemment l'eau contenue dans la boue qui est drainée et filtrée simultanément sur les massifs filtrants 21 et 23 en matériau tel que décrit précédemment et qui sont suffisamment poreux. Suivant le débit d'eau à traiter, on peut prévoir plusieurs pompes, une pompe pour aspirer l'eau contenue dans chacun des bassins, comme exposé dans le premier mode de réalisation.

Lorsque le traitement est terminé, les boues consolidées sont retirées des bassins et dans ce cas particulier de réalisation, le massif filtrant est changé si il est saturé, si non, il peut être utilisé jusqu'à saturation.

Des méthodes de consolidation des boues peuvent être également mises en .uvre conjointement, au cours ou après le traitement des boues selon le dispositif de la présente invention. Ceci aura pour avantage d'obtenir des boues parfaitement consolidées en un temps plus court.

Les problèmes d'étanchéité concernant les connections des différents tuyaux et de leur passage à travers la géomembrane 16 qui sont inhérents à tous les modes de réalisation, vont être expliqués en faisant référence à la figue 4.

La figure 4 montre plus en détail le raccordement des tuyaux crépinés 20 ou conduites drainantes avec les tuyaux lisses 22 et 24. En effet, ces tuyaux doivent être à la fois raccordés de façon étanche l'un à l'autre mais également, ils doivent traverser la géomembrane 16 sans perturber l'étanchéité des bassins. Les tuyaux 20 et 22 ou 24 sont donc reliés par des brides d'étanchéité 38. Ces connexions doivent être mises en place lors du creusement des bassins et avant l'installation de la géomembrane 16 recouvrant les parois de chacun des bassins.

Le diamètre de chacun des différents tuyaux ou conduites peut être adapté au débit d'eau à traiter.

## Revendications

1. Dispositif de traitement discontinu de boues polluées caractérisé en ce qu'il comprend :
- au moins un bassin principal (10) de traitement des boues délimité par au moins une berge externe(12);
- des moyens (16) pour réaliser une étanchéité à l'eau au fond et sur les parois du dit bassin principal (10) ;
- des moyens pour réaliser une étanchéité à l'air (18), destinés à être disposés au-dessus de la face supérieure des boues disposées dans ledit bassin principal (10) ;
- des moyens (20) de drainage de l'eau disposés à la partie inférieure du bassin, au dessus des moyens d'étanchéité à l'eau ;
- des moyens de filtration (30, 31, 33) de l'eau drainée pour retenir les polluants contenus dans les boues ;
- des moyens d'aspiration (26) reliés aux moyens de drainage pour favoriser le drainage de l'eau ; et
- des moyens d'évacuation de l'eau drainée (22, 24, 32).

2. Dispositif selon la revendication 1, caractérisé en ce que les moyens de filtration (30) sont situés en aval des moyens de drainage et reliés à des moyens d'aspiration additionnels (34) et en ce que les moyens de drainage comportent une pluralité de tuyaux crépinés (20) et les moyens d'aspiration comportent au moins une pompe à vide (26).

3. Dispositif selon l'une des revendications précédentes, caractérisé en ce qu'il comporte au moins un bouchon de nettoyage (36) permettant le nettoyage du dispositif.

4. Dispositif selon la revendication 1, caractérisé en ce que les moyens de filtration (21, 23) sont situés en amont des moyens d'aspiration et assurent également la fonction de drainage de l'eau et en ce que les moyens d'aspiration comportent au moins une pompe à vide (26).

5. Dispositif selon l'une des revendications précédentes caractérisé en ce que l'un au moins des moyens permettant l'étanchéité à l'eau (16) et de moyens d'étanchéité à l'air comporte au moins une feuille d'un matériau imperméable.

6. Dispositif selon l'une des revendication précédentes, caractérisé en ce que les moyens de filtration comprennent au moins un massif filtrant (21, 23 ; 30) composé d'un matériau capable de retenir le polluant à éliminer contenu dans l'eau.

7. Dispositif selon l'une des revendications précédentes caractérisé en ce que les moyens d'évacuation de l'eau comportent un réseau d'au moins un tuyau lisse (22, 24, 32).

8. Dispositif selon l'une quelconque des revendications précédentes caractérisé en ce que le bassin principal (10) est divisé en plusieurs bassins par des digues additionnelles(14).

9. Dispositif selon la revendication précédente, caractérisé en ce que les digues additionnelles (14) sont en matériau drainant ou en matériau filtrant et en ce que sous les digues additionnelle (14) est placé au moins un tube crépiné (22).

10. Dispositif selon une des revendications précédentes, caractérisé en ce que les moyens de filtration sont constitués un matériau réalisé à partir d'un coulis susceptible de retenir les ions métalliques lourds, ce matériau ayant une porosité suffisante pour permettre l'écoulement de l'eau drainée.
